# EUROPEAN PATENT APPLICATION

(11) **EP 4 741 032 A1**
(43) Date of publication of application: **13.05.2026**
(21) Application number: 24211351.2
(22) Date of filing: 07.11.2024
(51) Int. Cl.: B01D 19/04

(54) **PERFORMANCE ENHANCEMENT OF DEFOAMER FORMULATIONS VIA A MATRIX ENCAPSULATION STRATEGY**

(71) Applicant: Evonik Operations GmbH, 45128 Essen (DE)
(72) Inventor: MOTL, Nathan, 21015 Bel Air, MD (US); URBATH, Jonas, 42119 Wuppertal (DE); SCHIERLE, Thorsten, 45289 Essen (DE)
(74) Representative: Evonik Patent Association

(57) **Abstract**

An encapsulated defoamer composition is described which provides for sustained defoamer performance.

## Description

### BACKGROUND OF THE INVENTION

### FIELD OF THE INVENTION

The present disclosure relates generally to defoamers and antifoams, as well as a method of enhancing the performance of the same using a matrix encapsulation strategy.

### DESCRIPTION OF RELATED ART

Defoamers and antifoams have seen great utility in a cornucopia of manufacturing process. Their ability to disrupt and prevent the formation of foam in a variety of systems has proved invaluable for increasing process efficiency, waste reduction and ease of use. Application areas of these materials are diverse and include industries such as coatings, textiles, food processing, fermentation, paper manufacturing, and medical applications. Foams are formed when pockets of gas are trapped within a liquid or solid media in the presence of surfactants. Surfactants will often nucleate around these gas pockets, resulting in an increase in bubble stability and consequent foam formation. The surfactants typically form a double layer, effectively trapping a thin liquid film or lamella between two gas phase layers. These lamellae provide stability for the entrapped gasses as the foam structure continues to grow. The specific thickness and strength of the foam lamellae, as well as size of the individual gas bubbles within the foam, will vary depending on the specific liquids and surfactants present in the foaming system. Although most foam generating systems tend to be largely aqueous, non-aqueous systems are possible.

Defoamer performance is typically quantified by examining foam "knock-down" and foam "hold-down". "Knock-down" is typically measured by the rate and magnitude of the initial foam decrease after the introduction of the defoamer into the foaming system. Superior performance is characterized by a relatively rapid decrease in foam, and a relatively low level of remaining foam after the initial antifoam action has subsided. Conversely, defoamer "hold-down" is used to quantify how long a given defoamer or antifoam will keep the foam to a minimum before it is rendered inactive and foam growth resumes.

Due to the complex nature of the systems in which defoamers are often employed (fermentation reactors, food processing, industrial coatings, etc.). The defoamer may often be incompatible with the system and introduce defects, instability, or other undesirable traits into the process. Such incompatibilities are oftentimes more pronounced at increased defoamer concentrations. All currently available defoamers are subject to eventual defoamer deactivation in some form. Eventually the defoamer or antifoam will lose efficacy as it is exposed to continuous foam generation. Defoamer formulations are engineered to minimize deactivation and prolong foam "hold-down" for as long as possible.

Developing a general strategy to prevent deactivation of defoamers has proven difficult due to the diversity of defoamer formulations. For defoamer formulations that contain hydrophobic particles, it is thought that deactivation is the result of migration of the particulate matter out of the formulation droplets and the subsequent formulation of aggregates. For defoamers that are comprised of oils in the absence of particulates, deactivation is due to the breakdown of defoamer droplets below the size necessary to effectively rupture foam lamellae. Additionally, hydrophobic particles may further promote antifoam activity in some systems by absorbing surfactants onto their surface. As a result of the inherent system specificity, solutions to effectively inhibit defoamer deactivation are often non-transferable from one foam generating system to another.

For example, U.S. 9,579,291 describes the controlled-release of a defoamer from a porous carrier that encapsulated by an aqueous alginate layer. Although robust, using a core-shell encapsulated porous carrier instead of insoluble gel matrix, does not necessarily provide the best release profile for defoamer applications. Additionally, soluble alginate encapsulation would degrade too quickly to be effective in more demanding foam systems.

Similarly, U.S. 4,400,391 describes the use of alginate beads for the controlled-release of bioactive materials, specifically pesticides. The potential controlled-release of the bioactive from the encapsulate may occur through leaching, diffusion, dissolution, and degradation.

U.S. 5,024,937 describes the use of an oil-based antifoam droplets that are encased within solid particles of a water soluble encapsulant. The resulting material was then introduced into fermentation broths where exposure to the aqueous environment triggered the immediate release of the oil-based antifoam.

U.S. 5,773,407 describes the preparation of an encapsulated antifoam by use of an alkylalkoxysilane condensation reaction product four laundry detergent applications. The encapsulation was accomplished by the polycondensation of the alkylalkoxysilane, forming a protective shell around the defoamer emulsion. This shell is then mechanically degraded during the wash cycle, releasing the defoamer.

U.S. 6,165,968 describes a particulate foam control agent where an antifoam agent is loaded onto a zeolite material. The resulting composite is then encapsulated, creating a dry defoamer suitable for detergent applications.

U.S. 6,656,975 describes the encapsulation of non-polar silicone defoamer droplets with in a solid organic material that is moderately soluble in a polar medium. Upon heating past the melting point of the encapsulating material, the silicone defoamer is released. This allows for a delayed release of the defoaming agent that can be controlled via temperature.

EP 0339958 describes a silicone-based antifoam that is encapsulated in a meltable sugar. This was done so that the defoamer can be protected from deactivation/degradation from the surrounding medium until released with heat upon melting of the sugar based outer shell.

U.S. 2011/0236493 A1 disclosed an alginate has been used as a capping layer in conjunction with porous materials in consumer care and food applications for controlled-release.

In 2016, Teixeira (ACS Sustainable Chem, Eng. 2016, 4, 2449-2458) described alginate encapsulation of fertilizer for agricultural applications.

U.S. 9,404,068 disclosed the use of a water-soluble thin film covering the surface of a complete detergent formulation packet, not matrix encapsulated defoamers.

There remains a need for defoaming composition with a prolonged defoaming effect that is applicable to general systems

### BRIEF SUMMARY OF THE INVENTION

The invention described herein presents a general method for dramatically improving the performance of a defoamer formulation by minimizing defoamer deactivation and consequently improves upon foam "hold-down" This is accomplished by employing a "controlled-release" strategy through the use of alginate encapsulation/entrapment. Unlike film coatings or core-shell type encapsulations, the material described herein is relatively homogenous; the active defoamer is distributed evenly throughout the entire insoluble gel matrix.

Specifically, a completed defoamer formulation is completely encapsulated in non-water-soluble gel matrix comprised of an alginate such as calcium alginate in such a way that the encapsulated defoamer can be released into the foam generating system in a controlled manner. The resulting material can be described as a relatively homogenous gel comprised of calcium alginate, water, and the defoamer formulation. As the material degrades, the defoamer formulation is released into the foam generating system. The resulting controlled-release produced substantial increases in foam "hold-down" time by providing a gradual replenishment of the active defoamer, decreasing the effective defoamer deactivation rate.

This provides a general methodology for extending the effective defoamer lifetime that can be extended into a variety of foam generating systems where long-term foam "hold-down" is required. Additionally, the self-contained nature of the encapsulated material allows for the continued release of defoamer without adding more defoamer to the system. This is advantageous in applications where it is either impractical or impossible to continually meter in small amounts of defoamer throughout out the course of the foam generating process. This encapsulation approach has the added benefit of sequestering the majority defoamer from the foam system at any given time. By minimizing the defoamer concentration in the system, anyincompatibility that may result from the defoamer introduction can be greatly minimized. This allows for the use of defoamer compositions and concentrations that would otherwise be precluded from use.

The invention described herein provides the following aspects:
1. A defoamer composition, comprising: discrete composite particles comprising an active defoamer dispersed in a gel matrix of an insoluble encapsulant material.
2. A defoamer composition for a foam generating system, the composition comprising:
   (i) composite particles comprising a gel matrix of an insoluble encapsulant material and an active defoamer dispersed therein; and
   (ii) water.
3. A defoamer composition according to any preceding aspect, wherein the insoluble encapsulant material is a polysaccharide and/or a polysaccharide hydrogel and/or an acidic polysaccharide.
4. A defoamer composition according to any preceding aspect, wherein the insoluble encapsulant material is a divalent cationic alginate salt.
5. A defoamer composition according to aspect 4, wherein a divalent cation is at least one selected from the group consisting of calcium, magnesium, and iron.
6. A defoamer composition according to any preceding aspect, wherein the active defoamer further comprises at least one selected from the group consisting of an anticaking agent, a dehydrating agent, and a moisture absorbing agent; optionally wherein the insoluble encapsulant material further comprises calcium silicate.
7. A defoamer composition according to any preceding aspect, wherein under chemical, physical and/or mechanical force, the active defoamer is gradually released from the gel matrix.
8. A defoamer composition according to aspect 7, wherein the mechanical force is from at least one selected from the group consisting of gear pump recirculation, impeller blades in a CSTR, planetary mixers and overhead mixers.
9. A defoamer composition according to any preceding aspect, wherein the active defoamer is at a concentration range of about 1 % to about 90 % by weight, preferably about 1 to about 50 wt. %, about 1 to about 40 wt.%, about 1 to about 30 wt. %, and/or preferably about 2 to about 20 wt. %, of the composite particles.
10. A defoamer composition according to any preceding aspect, wherein the discrete composite particles comprise a particle size of from about 1 mm to about 500 mm, preferably about 1 mm to about 250 mm, about 1 mm to about 100 mm, about 1 mm to about 50 mm, and/or about 1 mm to about 10 mm.
11. A defoamer composition according to any preceding aspect, wherein gel droplets comprising the insoluble encapsulant material and the active defoamer comprise a droplet size of from about 1 mm to about 500 mm, preferably about 1 mm to about 250 mm, about 1 mm to about 100 mm, about 1 mm to about 50 mm, and/or about 1 mm to about 10 mm.
12. A process for encapsulating a defoaming system, the process comprising:
   (i) dispersing a defoaming system comprising an active defoamer into a monovalent polysaccharide salt solution to produce a mixture;
   (ii) adding the mixture dropwise to an aqueous divalent cationic salt solution for chelation and/or ion exchange; and/or
   (iii) forming a gel of an insoluble divalent cation polysaccharide matrix encapsulating the defoaming system.
13. A process according to aspect 12, wherein the monovalent polysaccharide salt solution is at least one selected from the group consisting of an alginate solution, a uronic acid salt solution, a hyaluronic acid salt solution, a chondroitin sulfate salt solution, a pectin salt solution, a chitosan salt solution, and a polysaccharide hydrogel solution; and optionally further comprises a polyacrylamide, polystyrene, and/or polyvinyl chloride.
14. A process according to any one of aspects 12 or 13, wherein the divalent cation is at least one selected from the group consisting of a calcium, a magnesium, and an iron cation.
15. A process according to any one of aspects 12 - 14, wherein the aqueous divalent cationic salt solution is an aqueous calcium chloride solution.
16. A process according to any one of aspects 12 - 15, further comprising adding calcium silicate to the active defoamer prior to dispersing.
17. A process according to any one of aspects 12 - 16, wherein the defoaming system comprises at least one selected from the group consisting of hydrophobic particles, an aqueous dispersion, an emulsion, and an oleophilic substance.
18. A process according to any one of aspects 12 - 17, wherein the gel produced comprising the active defoamer is homogeneous.
19. A process according to any one of aspects 12 - 18, wherein the process does not comprise a film coating or a core-shell encapsulation of the active defoamer.
20. An encapsulated defoamer obtained by the process according to any one of aspects 12 - 19.
21. An apparatus configured for utilizing the encapsulated defoamer according to aspect 20, the apparatus comprising:
   (i) a pump motor configured to power a pump that transports an encapsulated defoamer comprising an encapsulant and an active defoamer;
   (ii) a device configured to receive the encapsulated defoamer and a foam generating solution;
   (iii) a mechanical agitator configured to degrade the encapsulant of the encapsulated defoamer;
   (iv) a foam height monitor; and optionally
   (v) a feedback mechanism to shut off the encapsulated defoamer supply to the device upon reaching a pre-determined foam height and/or increase mechanical agitation.
22. Use of an aqueous calcium alginate solution in encapsulating a defoamer for controlled-release of an active defoamer.
23. Use of the defoamer composition according to any one of aspects 1-11, in at least one selected from the group consisting of a coating, a textile, food processing, fermentation, paper manufacturing, and a medical application.

Any aspects, including preferred ranges, of the invention disclosed herein may be combined.

Applicant has discovered that an active defoamer may be dispersed within a gel matrix of an insoluble encapsulant material, which is released over time under mechanical agitation, providing for enduring defoaming performance.

### BRIEF DESCRIPTION OF THE DRAWINGS

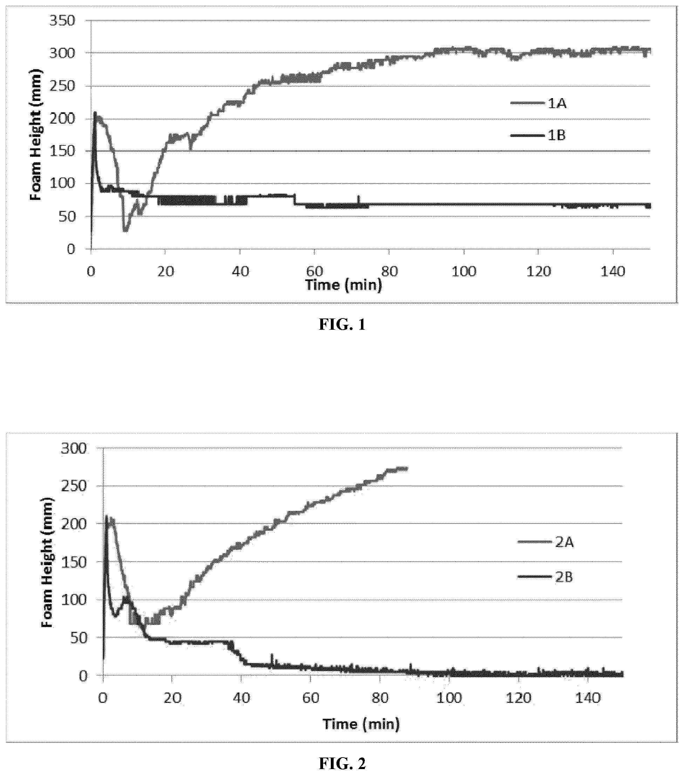

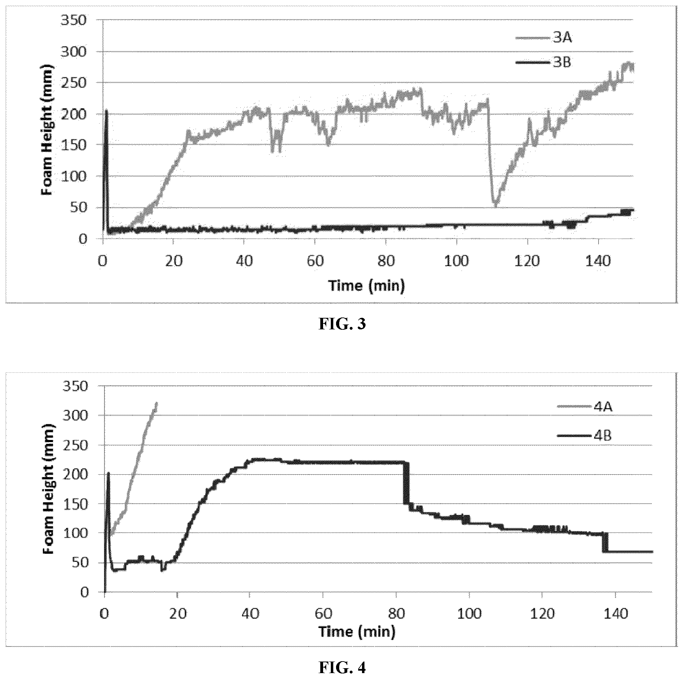

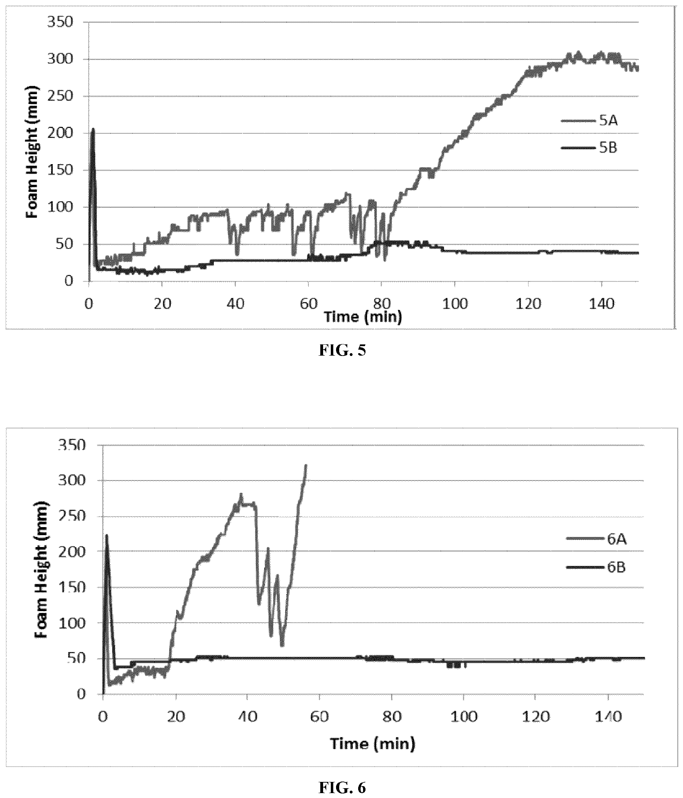

Figures 1-6 show the Contifoam performance plots of encapsulated defoamer samples compared to the as received defoamer formulations. The grey lines correspond to the as received defoamers, and the black lines correspond to the defoamer once encapsulated.
Figure 7 shows the sodium alginate and calcium alginate controls plotted along with the data from figure 6. The dashed lines correspond to the controls.
Figure 8 is an illustration of testing the application in an unpigmented overprint varnish system.

### DETAILED DESCRIPTION OF THE INVENTION

The controlled-release strategy has long been employed in a variety of fields as a way of slowly releasing active agents under specified conditions. The conditions that trigger the active release are typically based upon changes in the immediate chemical or physical environment. Chemical triggers could be changes in pH, or environment reactivity, while physical triggers could involve temperature changes or external mechanical forces. All these strategies are predicated on the encapsulation effectively sequestering the encapsulated active until the specific, desired environmental trigger is encountered, consequently the encapsulation process must be designed and selected with the appropriate release trigger in mind.

In addition to the appropriate release mechanism, the appropriate encapsulation method must be developed for the active in question. This can be especially challenging for defoamers and antifoams, where the antifoam ability is often sensitive to subtle changes in the physical and chemical environment.

One major obstacle for encapsulation that is particularly troublesome for defoamers and antifoams is the issue of immiscibility. Defoamers can be formulated as aqueous dispersions and emulsions, or as completely oleophilic substances. This can pose a unique challenge for encapsulation since many encapsulation techniques do not offer the necessary compatibility for both. Encapsulation techniques that rely on extensive thermal treatment or that generate heat as a byproduct must be approached with trepidation. Extensive heat can induce evaporation and/or thermal degradation of the defoamer formulation components, thus rendering the active unusable.

Additionally, great care must be taken to ensure that the reagents used in the encapsulation are themselves relatively inert, as far as the active is concerned. This is especially true when considering polymerization techniques that rely on the presence of initiators or catalysts to facilitate the encapsulation. Such chemical moieties can chemically denature components with the defoamer formulation, effectively deactivating any potential anti-foam activity.

When selecting the appropriate encapsulation matrix care must also be taken that release rate is appropriates for the application. Although some applications of controlled-release technologies can tolerate and/or require a rapid release of the active, for defoamers and antifoam, a slow, consistent release of the active is ideal. If the defoamer is released too fast, the rate of functional deactivation may not be significantly superior to the non-encapsulated control. If the material is released too slowly, the amount of additional active released will not be enough to defoam.

From the previous disclosures we can derive a few principal requirements for the ideal encapsulation methodology for defoamers and antifoams. First, the encapsulation process must be relatively inert and provide no deleterious effects on the defoamer once encapsulation is complete. Second, the release mechanism must provide a slow consistent release rate of the active without any damage to defoamer efficacy. Third, the ideal encapsulation methodology should be able to accommodate a wide variety of defoamer formulations without significant incompatibility. The alginate encapsulation methodology described herein satisfies these requirements and demonstrates significant improvement in the defoamer formulations examined.

### Active Defoamer

Active defoamers are known to those of ordinary skill in the art and are commercially available, such as 10459/M, 10459/N, and XFO-371 from Ivanhoe industries Xiameter defoamers antifoam emulsion AFE-1510, and antifoam compound ACP-1500 from Dow-Corning. and Tego Foamex 835 from Evonik.

For example, an antifoam emulsion composition which is emulsified in water is prepared. To this aqueous emulsion is added an alkylalkoxysilane that is soluble in the non-aqueous antifoam phase of the emulsion. Because the alkylalkoxysilane will undergo a condensation polymerization in the presence of water, the fraction of the alkylalkoxysilane that migrates to the phase boundary between the oil emulsion droplets and the continuous aqueous phase reacts undergoing a condensation polymerization and creating a crosslinked organopolysiloxane shell around the droplet of the non-aqueous phase, i.e. the antifoam composition.

The antifoam composition that constitutes the hydrophobic phase of the antifoam emulsion is comprised of:
(a) from about 5 to about 100 weight percent, preferably from about 20 to about 80 weight percent, more preferably from about 30 to about 70 weight percent, and most preferably from about 40 to about 60 weight percent of a polyorganosiloxane having a viscosity of about 5 to about 600,000 centistokes at 25° C, preferably from about 50 to about 100,000 centistokes, more preferably from about 100 to about 60,000 centistokes, and most preferably from about 100 to about 10,000 centistokes;
(b) from about 0.5 to about 40 weight percent, preferably from about 0.5 to about 30 weight percent, more preferably from about 0.5 to about 20 weight percent, and most preferably from about 0.5 to about 10 weight percent of a silicone resin comprising the formula:

   M_{w} Dₓ T_{y} Q_{z}

   where

   M=R¹ R² R³ SiO_{1/2},

   D=R⁴ R⁵ SiO_{2/2},

   T=R⁶ SiO_{3/2},

   and Q=SiO_{4/2} where R¹, R², R³, R⁴, R⁵ and R⁶ are each independently selected from the group consisting of one to forty carbon atom saturated, unsaturated and aromatic monovalent hydrocarbon radicals, hydrogen and trifluoropropyl, preferably from the group consisting of one to twenty carbon atom saturated and unsaturated monovalent hydrocarbon radicals, hydrogen and trifluoropropyl, more preferably from the group consisting of one to ten carbon atom saturated and unsaturated monovalent hydrocarbon radicals, hydrogen and trifluoropropyl, and most preferably from the group consisting of methyl, hydrogen and trifluoropropyl where the subscripts w and z are positive numbers having a ratio ranging from 0.55 to 1.20, preferably from 0.60 to 10, more preferably from 0.75 to 1.10 and most preferably from 0.75 to 1.05 and the subscripts x and y are zero or greater; the resin has a viscosity ranging from about 100 to about 600,000 centistokes at 25° C, preferably from about 100 to about 10,000 centistokes, more preferably from about 200 to about 4,000 centistokes, and most preferably from about 300 to about 700 centistokes;
(c) from about 0 to about 40 weight percent, preferably from about 0 to about 30 weight percent, more preferably from about 5 to about 20 weight percent, and most preferably from about 5 to about 15 weight percent of hydrophobing agent. By hydrophobing agent, Applicant functionally defines a compound that renders a hydrophilic surface hydrophobic. While not limited to this group, common hydrophobing agents may be selected from the group consisting of silanes, R¹ₐ SiX₄₋ₐ, where R¹ is independently as previously defined, X is a halogen selected from the group consisting of F, CI, Br and I and a is a subscript having values ranging from 1 to 3, cyclic siloxanes having the formula Dₙ, where D is independently as previously defined and n preferably has values ranging from 3 to 6, and silazanes having the formula: R¹ R² R³ SiHNSiR⁴ R⁵ R⁶, where R¹, R², R³, R⁴, R⁵ and R⁶ are independently selected as previously defined. Particularly preferred hydrophobing agents are hexamethyldisilazane and octamethyltetracyclosiloxane.
(d) from about 0.5 to about 50 weight percent, preferably from about 0.5 to about 45 weight percent, more preferably from about 2 to about 35 weight percent, and most preferably from about 2 to about 25 weight percent of a particulate, dispersible filler that has been treated to render it hydrophobic and has a BET surface area ranging from 10 to 1,000 m²/g. Examples of such particulate dispersible fillers include, but are not limited to, silica, precipitated silica, fumed silica, alumina, titania, zirconium silicate, aluminum silicate, mica, and sand. In the compositions of the present invention these materials are used in a size ranging from about 0.001 µm to about 5,000 µm, preferably from about 0.010 µm to about 500 µm, more preferably from about 0.100 µm to about 50 µm, and most preferably from about 0.100 µm to about 20 µm microns.
(e) from about 5 to about 60 weight percent, preferably from about 5 to about 50 weight percent, more preferably from about 10 to about 40 weight percent and most preferably from about 15 to about 30 weight percent of a silicone polyether copolymer having the formula: MD_{f} D'_{g} M where M and D are independently as previously defined, and D' defined as follows:

   D=R⁴ R⁹ SiO_{2/2},

   where R⁹ =(C₃ H₆ O)ₕ (C₂ H₄ O)ⱼ R¹, R⁴ is independently selected as previously defined and where the subscripts f and g each range from 0 to about 35 subject to the limitation that the sum is at least 5 and not greater than 50 and the subscripts h and j are zero or a positive number subject to the limitation that the sum of h and j is at least 1.

The antifoam composition made up from components (a) through (e) is emulsified by
(A) adding from about 0.5 to about 70 parts by weight, preferably from about 0.5 to about 60 parts by weight, more preferably from about 0.5 to about 50 parts by weight, and most preferably from about 0.5 to about 35 parts by weight of the antifoam composition; and
(B) adding from about 0.5 to about 40 parts by weight, preferably from about 0.5 to about 30 parts by weight, more preferably from about 0.5 to about 25 parts by weight, and most preferably from about 0.5 to about 20 parts by weight of an emulsifier or mixture of emulsifiers having a hydrophilic lipophilic balance (HLB) ratio of from about 7 to about 16, preferably from about 7 to about 14, more preferably from about 7 to about 12, and most preferably from about 8 to about 12. Thereby preparing an antifoam emulsion wherein the particle size ranges from about 1 micron to about 100 microns.

In order to facilitate dispersion of the active defoamer in a gel matrix precursor, an anticaking agent such as calcium silicate may be added to the active defoamer prior to dispersion in the gel matrix precursor.

### Gel Matrix Materials

As suitable gel matrix precursor materials are monovalent polysaccharide solutions such as alginate solution, uronic acid solution, hyaluronic acid solution, chondroitin sulfate solution, pectin solution, chitosan solution, and a polysaccharide hydrogel solution.

The molecular weight of the monovalent polysaccharide is not particularly limited, so long as a gel of the monovalent polysaccharide has sufficient mechanical integrity to provide resistance to release of the active defoamer, but to also allow for release of the active defoamer under mechanical agitation. Typically, the weight average molecular weight is up to about 190,000 g/mol, for example about 5,000 to about 190,000 g/mol, preferably about 25,000 to about 190,000 g/mol, more preferably about 30,000 to about 190,000 g/mol, or preferably about 50,000 to about 190,000 g/mol, preferably about 75,000 to about 190,000 g/mol, about 100,000 to about 190,000 g/mol, more preferably about 120,000 to about 190,000 g/mol. In one embodiment, the molecular weight for the alginate used is about 120,000 to about 190,000 g/mol. In one aspect, the alginate used is sourced from *Phaeophyceae* (brown algae). In addition to the above-described monovalent polysaccharide, the gel matrix material may further comprise water in soluble polymers, such as insoluble polysaccharides, chitosan salts, hydrogels such as polyacrylamides, polystyrenes, polyvinyl chloride and wax, in amounts of up to about 10 wt. % of the encapsulating material.

An aqueous solution of gel matrix material typically comprises about 0.5- about 5.0 wt. % of encapsulating material, preferably about 1.0- about 4.0 wt. %, more preferably about 2.0-about 3.0 wt. %.

### Dispersion of Active Defoamer in Encapsulating Material.

The active defoamer is dispersed in the encapsulating material by conventional methods known to one of ordinary skill in the art, such as by a high speed mixer, for example operating at a speed of about 5,000 to about 10,000 rpms, preferably the speed is about 7,500 to about 10,000 rpms. In one aspect, the speed is greater than 10,000 rpms. Higher speeds can be used if the defoamer is particularly difficult to disperse in the alginate solution.

The mixing speed and active defoamer content are based on the viscosity and/or miscibility of the defoamer with the alginate. In one aspect, vigorous shaking is enough to ensure sufficient mixing.

The concentration of active defoamer dispersed in the gel matrix precursor is typically about 1-about 90 wt. %, preferably about 1-about 80 wt. %, preferably about 1-about 70 wt. %, preferably about 1-about 60 wt. %, preferably about 1-about 50 wt. %, preferably about 1-about 40 wt.%, preferably about 1-about 30 wt. %, even more preferably about 2-about 20 wt. % based on the total weight of the dispersion.

In one aspect, the loading range is about 1 wt. % to about 30 wt. %, or 1 wt.% to about 20 wt. % based on the total weight of the dispersion. The concentration of active defoamer dispersed in the gel matrix precursor is such that the alginate is able to maintain the droplet and gel matrix structural integrity. In one embodiment, the particle size of discontinuous active defoamer in the gel matrix precursor is about 1 micron to about 80 microns, or preferably suitable for encapsulation.

Increased mixing of the alginate and defoamer will likely decrease the size of the discrete defoamer domains. Decreasing the size would likely slow down the release of active defoamer as the matrix degrades.

### Formation of Encapsulated Material

An insoluble encapsulant material may be formed from a dispersion of the active defoamer in the gel matrix precursor by introduction of droplets of the dispersion into an aqueous solution of a divalent salt, such as calcium, magnesium or iron, preferably calcium.

The aqueous solution of divalent salt is typically a saturated solution at room temperature, although lower concentrations may be used. Generally the concentration of divalent salt in aqueous solution is at least 70% of saturation, preferably at least 80% of saturation, more preferably at least 90% of saturation, at room temperature.

In one embodiment, the active defoamer used in the invention is at a concentration range of about 1 wt% to about 90 wt% by weight, of the composite particles. In another aspect, the active defoamer concentration is about 1 wt % to about 50 wt %, preferably about 1 wt % to about 40 wt %, more preferably about 1 wt % to about 30 wt %, even more preferably about 1 wt% to about 20 wt%, or about 1 wt % to about 10 wt%. In one aspect, the concentration is about 30 wt % +/- 10 wt%.

In another embodiment, the discrete composite particles comprise a particle size of from about 1 mm to about 500 mm. Preferably, the particle size is from about 1 mm to about 400 mm. More preferably, the droplet size is about 1 mm to about 300 mm, about 1 mm to about 250 mm, about 1 mm to 200 mm, about 1 mm to 100 mm, about 1 mm 50 mm, and/or about 1 mm to 10 mm.

Droplet size is affected both by the viscosity of the defoamer-alginate fluid, and the nozzle orifice. The droplet size of the materials shown in Table 1 was fixed at approximately 2 mm. This was done to ensure free flow through the Contifoam recirculation apparatus without clogging. In yet another embodiment, the gel droplets comprising the insoluble encapsulant material and the active defoamer comprise a droplet size of from about 1 mm to about 500 mm, or about 1 mm to about 400 mm. More preferably, the droplet size is about 1 mm to about 300 mm, about 1 mm to about 250 mm, about 1 mm to 200 mm, about 1 mm to 100 mm, about 1 mm 50 mm, and/or about 1 mm to 10 mm.

Formation of the gel matrix is typically conducted at room temperature although temperature as low as 5°C and as high as 30°C are possible. For example, the temperature is 18-25°C. Encapsulation may be conducted under mild agitation such as by stirring. The stirring force should be below a force which would separate the droplets of dispersion in order to prevent aggregation.

The use of an alginate encapsulation matrix offers a facile approach that satisfies the above requirements for the ideal defoamer encapsulation methodology. Alginates are highly branched polysaccharide gums that are derived from marine algae that are commercially available as salts of alginic acid after extraction. The solubility of alginate salts can vary based on the cation that is associated with the alginate salt. The encapsulation method described capitalizes on the insolubility of calcium alginate and the solubility of sodium alginate in aqueous solutions. Specifically, the defoamer active is first dispersed into a dilute sodium alginate solution. The resulting mixture is then added dropwise to an aqueous calcium chloride solution under stirring. When the sodium alginate comes into contact with the calcium chloride solution, the Na⁺ undergoes an ion exchange with the Ca²⁺ present in solution. The Ca²⁺ acts as a bridging ion between the carboxylate groups present on the alginate, forming a complex alginate network. This results in rapid gelation as the droplet of the alginate containing mixture is introduced into the calcium chloride solution. The insoluble calcium alginate matrix forms rapidly throughout the entire droplet, effectively entrapping the active defoamer within the gel. The resulting material is a relatively homogenous gel droplet comprised of calcium alginate, water, and the active defoamer. Although calcium alginate encapsulation has been used for the encapsulation of actives in a variety of applications such as biomedical encapsulation and chemical gastronomy, it can lend several distinct advantages to defoamer and antifoam applications.

A defoamer composition comprising discrete composite particles may be added to a composition to be defoamed in amounts of about 0.02 wt. % to about 0.2 wt. % active defoamer in the foam solution. Preferably, the amount is about 0.03 wt. %, 0.04 wt. %, 0.05 wt. %, 0.06 wt. %, 0.07 wt. %, 0.08 wt. %, 0.09 wt. %, 0.1 wt. %, 0.11 wt. %, 0.12 wt. %, 0.13 wt. %, 0.14 wt. %, 0.15 wt. %, 0.16 wt. %, 0.17 wt. %, 0.18 wt. %, 0.19 wt. %, or 0.20 wt. %. In one aspect, alginate droplets increase this amount to about 1 wt. %.

One critical advantage of calcium alginate is the insolubility of the gel in aqueous systems. Many encapsulation methods depend on the encapsulation matrix to be a least partially soluble in the reaction media as part of the release mechanism. As the gel matrix dissolves, the entrapped active is slowly released. Though this strategy has found great success in areas such as drug delivery and fragrance release, such solubility would be detrimental in systems where a slow gradual release is needed or where the encapsulated emulsion is itself capable of initiating premature dissolution. With calcium alginate encapsulation, the structural integrity and impermeability of the gel matrix will remain uncompromised for a wide range of aqueous systems. For the methodology presented, there are three key requirements for appropriate gel matrix selection: compatibility with the defoamer formulation used, insolubility in the foam generating system, and ability to release defoamer formulation upon matrix degradation.

Depending on the specific application, other non-water-soluble polymers which may be used in whole or in part to generate the gel matrix may include other insoluble polysaccharides such as chitosan salts, hydrogels such as polyacrylamides, polystyrenes, and polyvinyl chloride.

Alginate also has the added advantage of being biocompatible and safe for human consumption. This can allow for its use as an encapsulation matrix in applications such as food processing or fermentation as any incidental contact with the final product or ingestion would prove benign for both the environment and human consumption.

Calcium alginate also offers several economic benefits as an encapsulation matrix. Alginate salts are a renewable resource that is easily extracted from marine algae and possess widespread commercial availability. The encapsulation process can be accomplished at room temperature with minimal processing and relatively inexpensive raw materials.

Due to the nature of the encapsulation, the defoamer release mechanism from the calcium alginate gel matrix relies exclusively on a mechanically based release mechanism. Specifically, the calcium alginate gel droplets are exposed to mechanical agitation once they have been introduced into the foam generating system. Such agitation can be gear pump recirculation, impeller blades in a CSTR, planetary mixers, and many others. The mechanical agitation then slowly breaks apart the gel matrix, releasing the defoamer at a slow, deliberate rate. This mechanically triggered release has the advantage of being purely physical; that is, the release mechanism does not require additional reagents or a specific change within the chemical environment. This allows for a certain degree of versatility and generality for the application. The specific release rate can be modified by adjusting the alginate and defoamer concentrations pre-encapsulation, as well as agitation rate and method used post-encapsulation.

Since this methodology relies upon effectively dispersing the defoamer into an aqueous sodium alginate solution prior to encapsulation, issues may arise wherein the defoamer is completely immiscible with the alginate solution. Such incompatibility may result in failed encapsulation which will result in the defoamer being excluded from the calcium alginate matrix. This can be overcome, to some degree, by the introduction of a calcium silicate powder. It is hypothesized that the calcium silicate serves three functions in this system. First, by providing an oil-absorbing substrate for the defoamer, alginate incompatibility/immiscibility is minimized without sacrificing efficacy. Second, the early presence of soluble Ca²⁺ begins the gelation process at a slow, minimal rate prior to complete gelation, more effectively entrapping the defoamer. Thirdly, the presence of Calcium on the silicate surface offers binding sites for the alginate, increasing the structural stability of the gel matrix sufficiently enough to entrap the defoamer.

Having generally described this invention, a further understanding can be obtained by reference to certain specific examples which are provided herein for purposes of illustration only, and are not intended to be limiting unless otherwise specified.

### EXAMPLES

### Demonstration of Enhanced Efficacy and Versatility

Samples of defoamers 10459/M, 10459/N, and XFO-371 were obtained from Ivanhoe industries. Samples of Xiameter defoamers antifoam emulsion AFE-1510, and antifoam compound ACP-1500 were obtained from Dow-Corning. A sample of Tego Foamex 835 was obtained from Evonik. Contifoam analysis was conducted using a CONTIFOAM foam height measurement instrument (ING. FRANZ RAAB, Version 3.90a/USB/µc). The foam generating system was 500mL of a 6g/L dioctyl sulfosuccinate sodium salt (DOSS) solution. The recirculation rate was held constant at 1.19 L/min. The foam generating system has held at a constant temperature of 60.9°C via hot water recirculation bath. The defoamer introduction occurred once the foam height reached 200mm, which was approximately 1min after the beginning of the Contifoam run. Defoamer injection volume was tailored to each sample, this was necessary due to the inherent differences among the defoamer formulations and the differences in efficacy present for the foam generating system present in Contifoam testing. Each defoamer sample was first used "as received" in order to establish controls for an unaltered baseline level of performance.

The same volumes that were used in this initial testing were subjected to calcium alginate encapsulation. Special care was taken to ensure that the volumes of defoamer in the encapsulated samples were the same volumes used in the initial controls. To perform the calcium alginate encapsulation, the appropriate volume of liquid defoamer was first dispersed into 5.0g of a 2wt% sodium alginate solution. The resulting mixture was then added dropwise into 300mL of a saturated calcium chloride solution with 250rpm stirring via magnetic stir bar. After the addition was complete, the resulting encapsulated material was isolated via filtration, and stored in 15mL distilled water until use. The encapsulated materials were tested under the same Contifoam conditions as the defoamer controls. Table 1 summarizes the details of the experimental examples.

**Table 1 Details of the experimental examples**

| **Defoamer "As-Received"** | **Defoamer Sample #** | **Defoamer Manufacturer** | **Amount of Defoamer Used** | **Amount of 2wt% Alginate** | **Encapsulated Sample #** |
|---|---|---|---|---|---|
| 10459/M | 1A | Ivanhoe | 500µL | 5.0g | 1B |
| 10459/N | 2A | Ivanhoe | 1000µL | 5.0g | 2B |
| XFO-371 | 3A | Ivanhoe | 200µL | 5.0g | 3B |
| AFE-1510 | 4A | Dow-Corning | 300µL | 5.0g | 4B |
| ACP-1500 | 5A | Dow-Corning | 100µL | 5.0g | 5B |
| Foamex-835 | 6A | Evonik | 300µL | 5.0g | 6B |

Although there are significant differences among all the defoamers before encapsulations in terms of material composition and performance, all the encapsulated materials demonstrate superior foam hold-down time relative to their un-encapsulated counterparts. To verify the plausibility of the proposed controlled-release mechanism, two controls were prepared for Contifoam testing. The first control was prepared by mixing 300µL of defoamer Foamex-835 (sample 6A) with 5.0g of 2wt% sodium alginate. The resulting liquid mixture was then subjected to Contifoam testing. This is very similar to the preparation of sample 6B, but without the calcium chloride necessary to induce alginate insolubility and subsequent defoamer encapsulation. The second control was prepared by introducing 5.0g of a 2wt% sodium alginate solution dropwise into a saturated calcium chloride solution. The resulting material was then subjected to Contifoam testing.

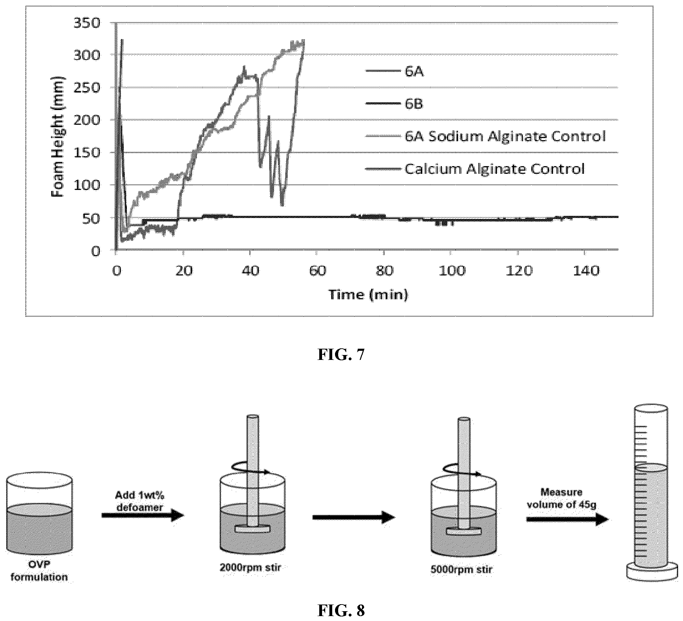

From the results shown in figure 7, the calcium alginate control demonstrates no antifoam or defoamer ability. After the material is introduced into the foam generating system, the foam level continues to increase without any change. Additionally, the 6A sodium alginate control demonstrates similar knock-down and overall foam hold-down to sample 6A. In order to produce the improved form hold-down seen in sample 6B, the defoamer must be encapsulated within the calcium alginate matrix. The performance does not significantly change unless the sodium alginate is converted into calcium alginate. Calcium alginate exhibits no discernible antifoam activity by itself under these testing conditions, a defoamer must be used.

### Application Testing in Unpigmented Overprint Varnish

To demonstrate the potential of encapsulated defoamers, the efficacy of a specific defoamer formulation is tested in a coatings system. Specifically, 30.0g of TEGO^{®} Foamex 1488 was encapsulated in 500g of an alginate matrix. Two encapsulate bead sizes of the materials were prepared, with radii of approximately 0.2cm and 0.4cm. The encapsulated defoamers were evaluated in an unpigmented overprint varnish (OPV)that was based on acrylate binders, specifically 50g in a 120mL cup. 1wt% defoamer was then dispersed in to the OPV using a Dispermat equipped with a 3cm blade for 1min at 2000rpm. The resulting mixture was then stirred for 5min at 5000rpm to generate foam within the system. 45g of the resulting material was then placed into a 100mL graduated cylinder to measure the volume. The greater the volume, the more foam was produced during mixing. An illustration of this process is in Figure 8. The resulting volume of foam measured, along with the compatibility rating is shown below in Table 2.

**Table 2 Results of volume of foam measured, along with the compatibility rating**

| **Sample Description** | **Testing Parameters** | **Dosage (%)** | **Volume (mL/45g)** | **Compatibility Rating*** |
|---|---|---|---|---|
| Blank OVP | Blank | 0 | >100 | 10 |
| 20% TEGO^{®} Foamex 1488 Control | Standard Reference E419629654 | 1 | 47 | 4 |
| 0.2cm Encapsulated TEGO^{®} Foamex 1488 | 1 min stir in, 2min stirring to foam | 1 | 62 | 7 |
| 0.2cm Encapsulated TEGO^{®} Foamex 1488 | 90 min stir in, 2min stirring to foam | 1 | 55 | 5 |
| 0.4cm Encapsulated TEGO^{®} Foamex 1488 | 1 min stir in, 2min stirring to foam | 1 | 63 | 7 |
| 0.4cm Encapsulated TEGO^{®} Foamex 1488 | 90 min stir in, 2min stirring to foam | 1 | 56 | 6 |

From the data shown in the Table 2; the lower the volume recorded corresponds to an increase in defoamer performance. It is important to note that the control contains 100mg of active defoamer, but that the encapsulated samples are only ~6wt% defoamer. This means that the performance of the encapsulated defoamer is similar to the control, but with only 30mg of actual defoamer.

The compatibility of the defoamer samples was examined after total foam collapse, 2hrs after the initial foam testing. This was done using a 12µm draw down on PE foil and rated on a scale from 1 to 10, with one being the worst, and 10 being the best. The encapsulated materials showed an increased compatibility with the system, demonstrating the benefit of this approach. The alginate spheres were also observed to break down over time, facilitating the controlled-release of the active defoamer. Any remnants of the alginate were readily filtered out of the system to prevent downstream contamination. Additionally, the alginate was observed to be relatively benign and compatible with the OPV system, with no changes in rheology or other physical properties observed.

Numerous modifications and variations on the present invention are possible in light of the above teachings. It is therefore to be understood that within the scope of the appended claims, the invention may be practiced otherwise than as specifically described herein. All embodiments described herein, including preferred embodiments, may be combined with each other.

## Claims

1. A defoamer composition, comprising:
discrete composite particles comprising an active defoamer dispersed in a gel matrix of an insoluble encapsulant material.

2. A defoamer composition for a foam generating system, the composition comprising:
(i) composite particles comprising a gel matrix of an insoluble encapsulant material and an active defoamer dispersed therein; and
(ii) water.

3. A defoamer composition according to any preceding claim, wherein the insoluble encapsulant material is a polysaccharide and/or a polysaccharide hydrogel and/or an acidic polysaccharide.

4. A defoamer composition according to any preceding claim, wherein the insoluble encapsulant material is a divalent cationic alginate salt.

5. A defoamer composition according to claim 4, wherein a divalent cation is at least one selected from the group consisting of calcium, magnesium, and iron.

6. A defoamer composition according to any preceding claim, wherein the active defoamer further comprises at least one selected from the group consisting of an anticaking agent, a dehydrating agent, and a moisture absorbing agent; optionally wherein the insoluble encapsulant material further comprises calcium silicate.

7. A defoamer composition according to any preceding claim, wherein under chemical, physical and/or mechanical force, the active defoamer is gradually released from the gel matrix.

8. A defoamer composition according to claim 7, wherein the mechanical force is from at least one selected from the group consisting of gear pump recirculation, impeller blades in a CSTR, planetary mixers and overhead mixers.

9. A defoamer composition according to any preceding claim, wherein the active defoamer is at a concentration range of about 1 % to about 90 % by weight, preferably about 1-about 50 wt. %, about 1-about 40 wt.%, about 1-about 30 wt. %, and/or preferably about 2-about 20 wt. %, of the composite particles.

10. A defoamer composition according to any preceding claim, wherein the discrete composite particles comprise a particle size of from about 1 mm to about 500 mm preferably about 1 mm to about 250 mm, about 1 mm to about 100 mm, about 1 mm to about 50 mm, and/or about 1 mm to about 10 mm.

11. A defoamer composition according to any preceding claim, wherein gel droplets comprising the insoluble encapsulant material and the active defoamer comprise a droplet size of from about 1 mm to about 500 mm, preferably about 1 mm to about 250 mm, about 1 mm to about 100 mm, about 1 mm to about 50 mm, and/or about 1 mm to about 10 mm.

12. A process for encapsulating a defoaming system, the process comprising:
(i) dispersing a defoaming system comprising an active defoamer into a monovalent polysaccharide salt solution to produce a mixture;
(ii) adding the mixture dropwise to an aqueous divalent cationic salt solution for chelation and/or ion exchange; and/or
(iii) forming a gel of an insoluble divalent cation polysaccharide matrix encapsulating the defoaming system.

13. A process according to claim 12, wherein the monovalent polysaccharide salt solution is at least one selected from the group consisting of an alginate solution, a uronic acid salt solution, a hyaluronic acid salt solution, a chondroitin sulfate salt solution, a pectin salt solution, a chitosan salt solution, and a polysaccharide hydrogel solution; and optionally further comprises a polyacrylamide, polystyrene, and/or polyvinyl chloride.

14. A process according to any one of claims 12 or 13, wherein the divalent cation is at least one selected from the group consisting of a calcium, a magnesium, and an iron cation.

15. A process according to any one of claims 12-14, wherein the aqueous divalent cationic salt solution is an aqueous calcium chloride solution.

16. A process according to any one of claims 12-15, further comprising adding calcium silicate to the active defoamer prior to dispersing.

17. A process according to any one of claims 12-16, wherein the defoaming system comprises at least one selected from the group consisting of hydrophobic particles, an aqueous dispersion, an emulsion, and an oleophilic substance.

18. A process according to any one of claims 12-17, wherein the gel produced comprising the active defoamer is homogeneous.

19. A process according to any one of claims 12-18, wherein the process does not comprise a film coating or a core-shell encapsulation of the active defoamer.

20. An encapsulated defoamer obtained by the process according to any one of claims 12-19.

21. An apparatus configured for utilizing the encapsulated defoamer according to claim 20, the apparatus comprising:
(i) a pump motor configured to power a pump that transports an encapsulated defoamer comprising an encapsulant and an active defoamer;
(ii) a device configured to receive the encapsulated defoamer and a foam generating solution;
(iii) a mechanical agitator configured to degrade the encapsulant of the encapsulated defoamer;
(iv) a foam height monitor; and optionally
(v) a feedback mechanism to shut off the encapsulated defoamer supply to the device upon reaching a pre-determined foam height and/or increase mechanical agitation.

22. Use of an aqueous calcium alginate solution in encapsulating a defoamer for Controlled-release of an active defoamer.

23. Use of the defoamer composition according to any one of claims 1-11, in at least one selected from the group consisting of a coating, a textile, food processing, fermentation, paper manufacturing, and a medical application.
